# EUROPEAN PATENT APPLICATION

(11) **EP 2 606 974 A1**
(43) Date of publication of application: **26.06.2013**
(21) Application number: 11194267.8
(22) Date of filing: 19.12.2011
(51) Int. Cl.: B01L 3/00, G01N 21/64

(54) **An optical detection system, a cartridge therefor and a reader therefor**

(71) Applicant: NXP B.V., 5656 AG Eindhoven (NL)
(72) Inventor: Loud, Erik Jan, Redhill, Surrey RH1 1DL (GB)
(74) Representative: Hardingham, Christopher Mark

(57) **Abstract**

A optical detection system for used as a bio sensor is disclosed, comprising a card or cartridge and a reader. The cartridge comprises at least a detection chamber and an optical detector, and the reader includes means to urge a fluid into the detection chamber to initiate the analysis. The optical coupling may be enhanced by including optical elements in the card; conversely the system may be simplified by reducing or eliminating the number of moving parts in the card.

In embodiments, additional elements such as a light source which may be an LED, flow restrictors or mixers, and electronic elements such as NFC functionality, may be included on the card. The card may be compatible with smart-cards.

## Description

### Field of the Invention

This invention relates to optical detection systems for detecting biomolecules. It also relates to cards or cartridges used in such optical detection systems, and readers for reading such cards.

### Background of the Invention

There is recent and growing interest in systems for sensing biologically active molecules, that is to say biomolecules. Such systems, which may be termed biological sensors or biosensors, usually involve an electrical sensing mechanism or an optical sensing mechanism. Optical sensing mechanisms rely on the detection of either the target molecule itself, or more commonly an optical marker which attaches or binds to the target molecule. Optical detection modes are generally split into different luminescence modes, wherein the target molecule or the optical marker emits light, other than as a result of heat. Although there is a wide range of different forms of luminescence, the most commonly used in optical detection are chemo-luminescence, electroluminescence, and photoluminescence, in particular in the form of fluorescence. Fluorescence occurs where the target biomolecule or optical marker is excited by an optical source, and then emits photons of a lower energy than those used to excite it.

Recently, so-called "lab on chip" systems have been developed which comprise a disposable cartridge and a benchtop sized or even handheld control instrument or reader that manages the interface between the cartridge and either an operator or a control computer.

Fully integrated lab on chip optical systems have been proposed, for instance by S. Balslev et al., "Fully Integrated Optical System for Lab-On-A-Chip Applications", Micro Electro Mechanical Systems, 2004, 17th IEEE International Conference on (MEMS) Maastricht, Netherlands Jan. 25-29, 2004, Piscataway, NJ USA IEEE, US, Jan. 25, 2004, pp. 89-92. They are highly complex, and difficult to manufacture.

### Summary of the invention

According to one aspect there is disclosed a card for use in an optical detection system for detecting biomolecules, the card comprising a stacked arrangement of a sample volume and an optical detector, the sample volume being for containing, in use, an analyte. The card may further comprise at least one reservoir for containing an analyte precursor configured such that, in use, the analyte precursor can be urged towards the sample volume by an actuator external to the cartridge. By providing that the analyte can be urged into sample volume by an actuator external to the cartridge, the cartridge itself may have reduced complexity, and in particular may not require, to the same extent or even at all, moving parts such as pumps. As used herein, the term 'stack', when used in respect of a plurality of layers, indicates that the layers are arrangement in ordered sequence, with each successive layers being generally or at least partly overlying the preceding layer. By providing a stack including at least a sample volume and an optical detector, the optical path may be simplified and in particular may involve fewer reflective surfaces than might otherwise be the case were the detection to be carried out external to the cartridge. This may result in an improvement in the detection level of system. In contrast to a longitudinal arrangement, wherein the elements are separately arranged along the length or width of a cartridge, a stack arrangement is particular suited for ease of manufacture and compactness. In particular, the need for an elaborate optical system including lenses and the like may be avoidable. The analyte precursor may be the same as the analyte, or may be a fluid which is processed, for instance by mixing with another fluid to induce a chemical reaction therebetween, or by filtering (for example to isolate platelets from a whole blood analyte precursor) to result in the analyte

In embodiments, the stacked arrangement further comprises an optical filter between the sample volume and the optical detector. Such a filter may be useful for passing through those wavelengths that need to be detected (e.g. from an optical marker which may be present in the analyte) or to block those wavelengths that come from a light source. One such light source may be used to excite the target molecule (that is, the biomolecule itself) or the optical marker to emit light. In embodiments, the stacked arrangement further comprises a light source, and the sample volume is between the light source and the optical detector. The optical path may thereby be further simplified, which may thus result in a further improvement in the detection level of the system.

In embodiments, the stacked arrangement further comprises an optical filter between the light source and the sample volume. Such a filter may be useful for passing through those wavelengths that may be required to excite the target molecule or the optical marker or to detect the absorbance of these molecules.

In embodiments at least one of the light source is a light emitting diode and the optical detector is a photodiode. The photodiode may be an avalanche photodiode. Light emitting diodes are convenient light sources, which generally have a distinct well-controlled emission wavelength or range of wavelengths. Semiconductor-based LEDs are well known, and use of surface emitting LEDs such as so-called VCSELS (vertical cavity surface emitting LEDs may conveniently be used, since their output is directly from a surface of the device, rather than from an end. However and without limitation, other light sources, in particular those which can be manufactured entirely by thin-film technology, such as organic LEDs or electroluminescence sources, may be used in embodiments.

In embodiments, the stacked arrangement further comprises a cooling element. The cooling element may be provided to cool one or more of the optical detector, the sample volume, and the optical light source.

In embodiments, the stacked arrangement further comprises a heating element. The heating element may be provided to heat one or more of the optical detector, the sample volume, and the optical light source.

In embodiments, the stacked arrangement further comprises a thermal isolation layer. Such a thermal isolation layer may provide thermal isolation on one or both of the optical detection side of the optical detector and the optical emission side of the light source. Such a thermal isolator may limit the heating up of the sample volume and/or the optical detector by the light source. Such a thermal isolator may limit the heating up of heaters around the sample volume to the optical detector.

In embodiments, the card may further comprise electrical contacts for providing, in use, electrical communication with a reader.

In embodiments the card may further comprise a near field communication (NFC) circuit and antenna for outputting data. Since NFC communication does not require a wired interface, this may be particularly convenient, particularly for communication of data.

In embodiments the card has dimensions in compliance, or in partial compliance, with the ISO/IEC 8710 standard. The card may be partially compliant in that it has the same lateral dimension as defined in the standard, but a different thickness; in particular the thickness may be up to 1 mm, or even up to 5mm. Compliance or partial compliance with the standard may enable use of standard manufacturing equipment. Alternatively or in addition, compliance or even partial compliance may increase the compatibility with standard smart-card readers, and thus lead to reduced costs.

According to another aspect there is provided a reader for use in an optical detection system for detecting biomolecules and configured to read a card as just described, the reader comprising a compression system for compressing at least part of the card so as to, in use, urge the analyte precursor towards the sample volume. The analyte precursor may enter the sample volume as is in which case the analyte precursor is the same as the analyte, or it may undergo one or more reactions, before entering the sample chamber as the analyte.

In embodiments the compression system comprises at least one roller. By using one or more rollers, it may be arranged that the act of insertion of the card into the reader may initiate the urging of the analyte precursor towards or into the sample volume. Use of more than one roller may anable the analyte precursor to undergo processing prior to reaching the sample volume, for instance by reaction with another fluid, which is itself urged or driven from a reservoir at a different moment, than the moment the analyte precursor is urged, or driven, from it reservoir.

According to yet another aspect there is provided a biomolecule marker detection system comprising a cartridge and a reader as just described.

These and other aspects of the invention will be apparent from, and elucidated with reference to, the embodiments described hereinafter.

### Brief description of Drawings

Embodiments of the invention will be described, by way of example only, with reference to the drawings, in which
Figure 1 shows a schematic of an optical detection system for biomolecules comprising a cartridge mounted in a reader, and a computer;
figure 2 shows a cartridge for an optical detection system, at figure 2(a) by itself, and at figure 2(b) loaded into a reader;
figure 3 shows a schematic of a cartridge according to embodiments;
figure 4 shows a schematic of another cartridge according to other embodiments;
figure 5 is a schematic showing typical or example thicknesses of various stacked arrangement;
figure 6 shows a schematic of the functionalities on the cartridge;
figure 7 shows a schematic of the functionalities on an alternative cartridge; and.
figure 8 shows a schematic of some layered arrangements of the light source, sample volume and optical detector.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments

### Detailed description of embodiments

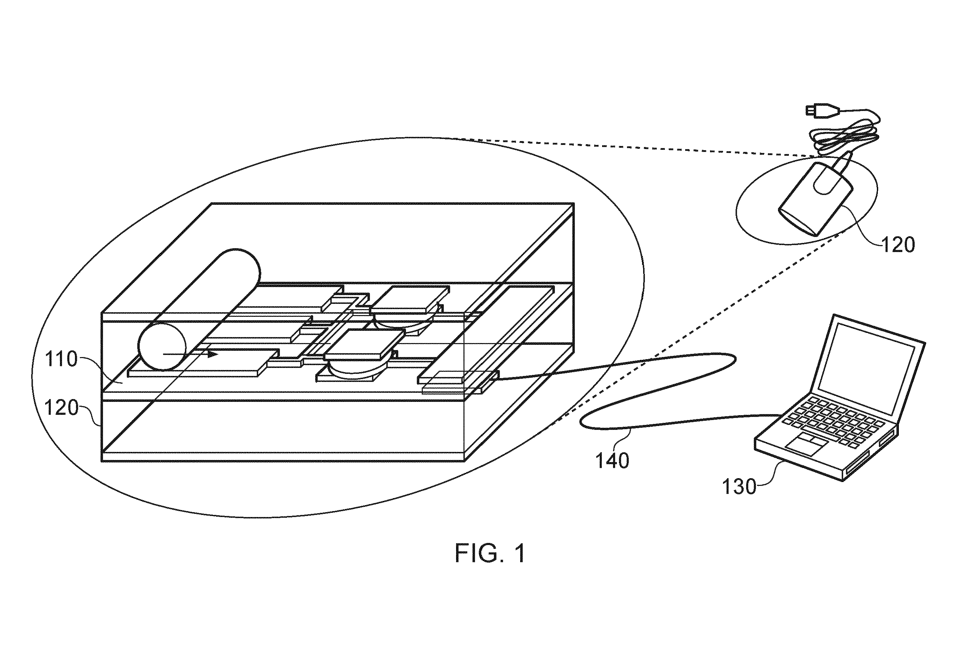

Figure 1 shows an optical detection system for biomolecules, comprising a cartridge 110 mounted in a reader 120, and a computer 130; as shown the reader is in electrical communication with the computer by means of a wired interface 144; however in other arrangement the reader may be in electrical communication with the computer by means of a wireless interface. In other arrangements, a computer is not required at all, the complete functionality being in the cartridge and reader. The cartridge 110 may be inserted into the reader 120, in a known manner, by pushing it into an opening at one end of the reader, as will be familiar from smartcards and smartcard readers in various fields, ranging from bank pass-cards to smartcards and readers for accessing the European Patent Office's on-line services (Epoline™).

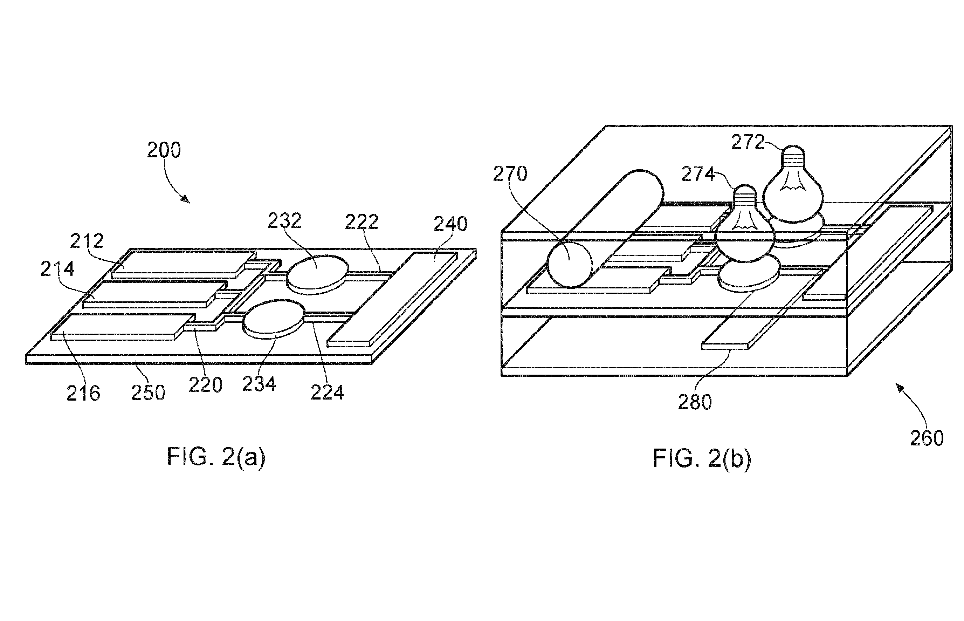

Figure 2(a) shows a cartridge 200 for an optical detection system. As shown the cartridge includes various microfluidic elements. These may include fluid reservoirs 212, 214 and 216, microfluidic routing tracks 220, 222, and 224, detection chambers 232 and 234, and fluid waste tank 240. The detection chambers 232 and 234 thus form sample volumes, into which, in use, fluid is routed, as will be discussed in more detail below. The fluid in the sample volume may then be considered to be an analyte for an analysis, which takes the form of optical detection and thus the sample volume may be termed a detection chamber. It will be appreciated that although in the schematic at figure 2(a) the microfluidic elements are shown as residing on top of cartridge substrate 250, in general the microfluidic elements will be embedded within an encapsulating material which may form both a substrate and a superstrate. The encapsulant material may generally be a plastics materials such as is widely used for smartcards. Without limitation, the material may be a silicone-based material. Alternatively, and again without limitation, materials which are known for use in microfluidics may be used, such as thermoplastics - for instance PMMA (polymethyl methacrylate), PC (polycarbonate), PSU (polysulfone), PA (polyamide) or POM (polyoxymethylene) - or PMMA (polymethylmethacrylate) or PDMS (polydimethylsiloxane). The cartridge may include other microfluidic elements, not shown, such as fluid restrictors or flow limiters, fluid filters or pumps, mixing chambers, process chambers, valves, intakes and the like.

Figure 2(b) shows the cartridge 200 when loaded into a reader 260. As shown in the figure, the reader may include one or more light sources 272, 274, together with one or more detectors 280. When the cartridge is fully inserted into the reader, the respective light sources 272 and 274 and the detector or detectors 280 are aligned with respective detection chambers 232 and 234.

The figure also shows that the reader comprises one or more rollers 270 which may be used to compress the cartridge and in particular to compress the fluid reservoirs 212, 214 and 216. An effect of this compression may be to urge or drive fluid which is contained in the fluid reservoirs 212, 214 and 216 out of the reservoirs and towards the detection chambers 232, 234. Thus the act of inserting the cartridge into the reader may obviate the need for separate pumps or moving parts within the cartridge to effect this urging, or to initiate fluid flow within the microfluidic circuit. It will be appreciated that although, as shown in figure 2(b), the process flow for the fluid may be relatively simple, a more complicated process flow may also be envisaged, where the fluid is directed towards mixing chambers or filters before reaching the detection chamber 232 and 234. Similarly, although the embodiment shown in figure 2(b) has a single roller, a plurality or rollers may be used, each in a different position and extending across at least a part of the cartridge, in order to control and direct fluid in a more complex process flow, as the cartridge is progressively inserted into the reader. Alternatively and without limitation, one or more rollers may independently be driven, for example by small electrical motors housed in the reader

Once the cartridge has been inserted into the reader, and one or more fluids urged towards the detection chamber or chambers as analytes, an optical detection may be undertaken. In the case of fluorescence, this may comprise shining a light from light sources 272, 274 into the detection chambers 232, 234. If an appropriately fluorescing target molecule, or target molecule having bound to it an appropriately fluorescing optical marker, is present in the analyte in the detection chamber, the fluorescence may be detected by the detector or detectors 280.

It will be appreciated that by including the detector 280 and the light sources 272, 274 in the reader, there will be air gaps between the reader and cartridge, which contribute to the optical losses in the system. Even in the presence of antireflective coatings, there will be losses associated with internal reflection.

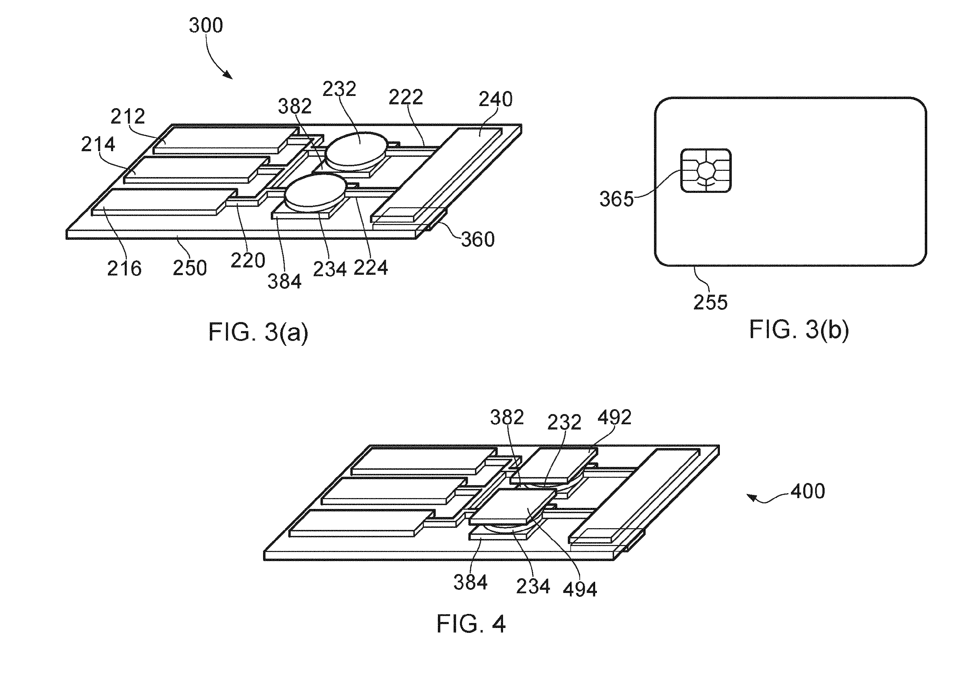

Figure 3 shows a schematic of a cartridge 300 according to embodiments, which allows for reduced losses. As shown, this cartridge includes similar microfluidic elements including reservoirs 212, 214 and 216, microfluidic routing tracks 220, 222, and 224, detection chambers 232 and 234, and fluid waste tank 240, to those shown in figure 2A. However, in this figure there is also included, as part of the cartridge, detectors 382 and 384. The detectors are aligned underneath the detection chambers 232 and 234 respectively such that the detection chamber 232 and detector to 382 form a stack. By providing the detector or detectors 382 and 284 within the cartridge, the optical losses associated with multiple reflections caused by an air gap may be reduced. The detector or detectors may, without limitation, be avalanche photodiodes (APDs).

The detector may be integrated immediately underneath the detection chamber. In other embodiments there may be a filter therebetween. Without limitation, the filter may be a separate component which is positioned between the detector and the detection chamber, may be integrated into the bottom surface of the detection chamber, or into a top surface of the detector, and may be a so-called "thin-film" filter formed by the deposition of a series of layers whose thicknesses and refractive indices are chosen so as to provide a desired filter function such as, in particular, a wavelength-specific notch filter.

Figure 3 also shows electrical contacts 360 integrated into the cartridge. It will be appreciated that the electrical contacts may take many forms. The electrical contacts may take the form of a micro USB (universal serial bus) connector, between the cartridge and the reader. However using such a connector may be relatively expensive, and in other embodiments, the electrical contacts may be arranged on an upper or a lower surface of the cartridge for contacting corresponding pin-contacts in the reader by pressure. A set of such electrical contacts 365, as are typically used in smartcard applications, is shown in figure 3(b) at 365 which also shows an example, schematic plan of a cartridge, which has a form 255 similar to, or the same as, a smart card. It will be appreciated, that in embodiments, the cartridge 300 may take the physical dimensions of a smartcard, and may be manufactured from the same or similar materials. In other embodiments, the cartridge will have the same lateral dimensions as a smartcard, but a different thickness. In such embodiments it may be convenient to provide the cartridge, configured as a card, with a group of electrical contacts such as that shown in figure 3, on an upper or lower surface of the card. In some embodiments, so-called NFC (Near Field Communication) or RFID (Radio Frequency ID) communication may be used; such communication may be compliant with ISO/EIC 14443 standards. In other embodiments, the card may have larger dimensions - typically up to 2 or 3 times larger, than is the case for a standard smart-card.

Figure 4 shows a schematic of another cartridge according to other embodiments. Various components are similar to those shown in figure 3, so will not be separately recited. However, in this embodiment, light sources 492 and 494 are also integrated into the cartridge 400. Light source 492 is arranged above detection chamber 232 and detector 382 so as to form a stack; similarly, light source 494 is arranged above detection chamber 234 and detector 384 so as to form another stack. It will be appreciated that the number of stacks is not critical: there may be just one stack, or a plurality of stacks; choosing two stacks is for the purposes of illustration only. The light source or light sources may, without limitation, be light emitting diodes (LEDs) or diode lasers.

The light source may be integrated immediately above the detection chamber. In other embodiments there may be a filter therebetween. Without limitation, the filter may be a separate component which is positioned between the light source and the detection chamber, may be integrated into the top surface of the detection chamber, on into a bottom surface of the light source, and may be a so-called "thin-film" filter formed by the deposition of a series of layers whose thicknesses and refractive indices are chosen so as to provide a desired filter function such as, in particular, a wavelength-specific notch filter.

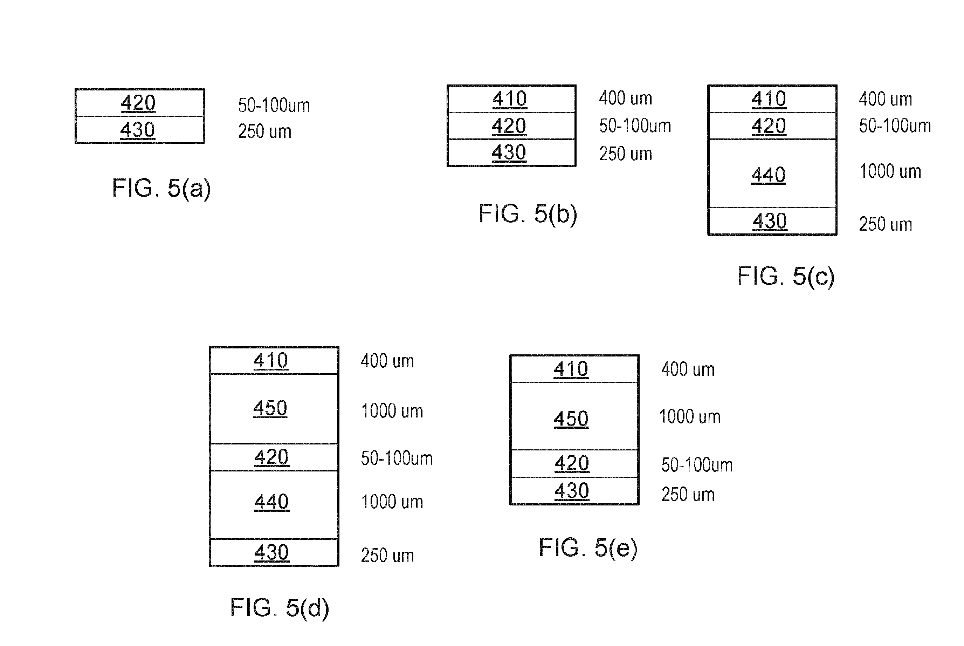

Non-limiting examples of the thicknesses of the components of stacks for various modes of detection are shown in figure 5.

Figure 5(a) shows a particularly simple stack comprising a detection chamber 420 and a detector 430. Such a stack may be suitable for a chemo-luminescence type of optical detection. For chemo-luminescence, detectable photons are generated upon a chemical reaction in the sample volume that is related to the concentration of the target molecule or the optical marker.

Figure 5(b) shows a stack comprising an optical emitter 410 such as a narrow-banded LED or laser, above a detection chamber 420 and a detector 430. Such a stack may be suitable for a chemo-luminescence, absorbance and time-resolved fluoresnence types of optical detection. For chemo-luminescence, the stack functions as described above with reference to figure 5(a). For absorbance the optical emitter emits at an absorbing wavelength of the target molecule or the optical marker, which is indicative of its concentration in the sample volume. For time-resolve fluorescence, the light source is pulsed on while the detector is off - at least at the excitation wavelength of the target molecule or the marker. Then, while the light source is off, that is between pulses, the detector measures the fluorescence of the target molecule or the marker, which is indicative of their concentrations in the sample volume. Once the fluorescence has decayed out, the optical emitter is pulsed on again, to restart the sequence. The thicknesses of the components in the stack are, respectively 400 µm, 50-100 µm and 250 µm, which total to between 700 and 750 µm.

Figure 5(c) shows a stack comprising an optical emitter 410, above a detection chamber 420, and bulk filter 440, and a detector 430. Such a stack may be suitable for chemo-luminescence, luminescence (that is to say, fluorescence and time-resolved fluorescence) and absorbance type of optical detection. The thicknesses of the components in the stack are, respectively, 400 µm, 50-100 µm, 1,000µm and 250 µm, which total to between 1,700 and 1,750 µm.

Figure 5(d) shows another stack which also may be suitable for chemo-luminescence, luminescence (that is, fluorescence and time-resolved fluorescence) and absorbance detection; the stack is generally similar to that shown in figure 5(c), although in this case an additional filter 450 is positioned between the optical emitter and detection chamber. If this additional filter also has a thickness of 1,000 µm, the total stack thickness is between 2,700 and 2,750 µm.

Finally, at figure 5(e), is shown a yet further stack which may be suitable for chemo-luminescence, luminescence (that is, fluorescence and time-resolved fluorescence) and absorbance. This stack has only a single filter 450, being the filter between the optical emitter and the detection chamber. In the case that this filter has a thickness of 1,000 µm, the total stack thickness is again between 1,700 and 1,750 µm.

It will be appreciated that the dimensions mentioned in each of the above stacks are examples only, and are generally based on readily available or off-the-shelf (OTS) components. Significant changes, and in particular reductions, in the thicknesses of some of the elements may be possible, by use of improved assembly methods, or further fabrication steps such as silicon grinding and other thinning techniques.

Dimensions of smart cards which conform to the ISO/IEC 7810 ID-1 standard are typically 85.6mm by 53.98mm with a thickness of 760 µm. It will be immediately apparent that at least two of these types of stack (shown in figure 5(a) and figure 5(b) ) have smaller thicknesses than the standard smartcard dimension. Thus such stacks may fit within the thickness of a standard smart-card, without further adaption. With a suitable choice of light source having a reduced thickness than that indicated above, and by, for instance, using thin-film filters, it may be that at least some of the other types of stacks could also have thickness which falls within the ISO smartcard standard thickness.

In any event it will be appreciated that the thickness of the cartridge may be at least similar to if not equal to the thickness of a standard smartcard. Use of technologies which are well developed to manufacture smartcards may thus be utilised, in order to manufacture embodiments, and it will be readily apparent that the overall cost and availability of optical detection systems based on such technology may be significantly lower than alternative approaches.

In the present application, the term "cartridge" is generally be used although the implementation may be functionally similar or equivalent to a smartcard. The term "card" may thus be considered to be an equivalent to the term "cartridge" as used in the present application.

In embodiments and in particular in case of the detection of fluorescence of the target molecule or the optical marker, Fluorescence lifetime imaging microscopy, or time-resolved fluorescence detection as described by Müller *et al.,* p329-344 in Seitz et al, "Single-Photon Imaging" Springer-Verlag, Berlin-Heidelberg (2011) (ISBN 978-3-648-18442-0) may be used. In such case, filters may not be required in the stack.

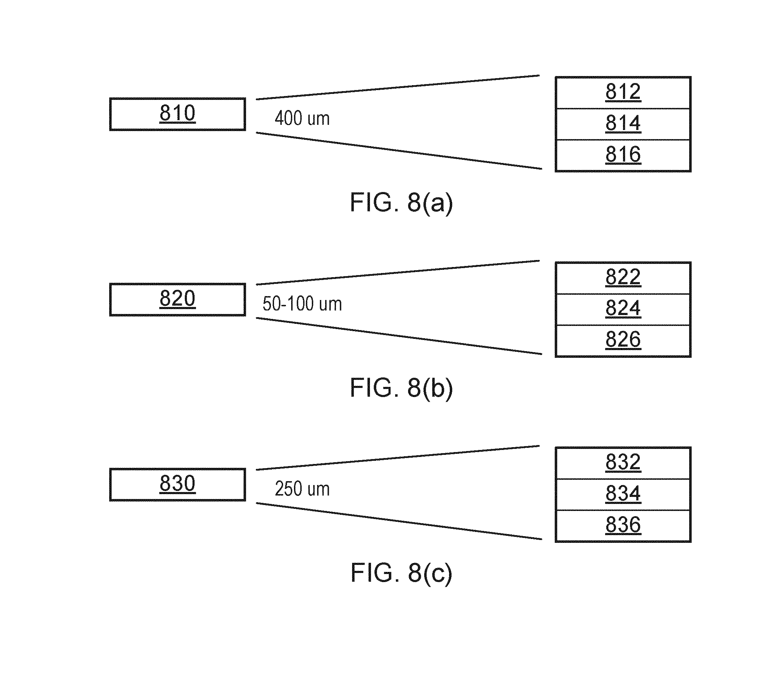

In some embodiments thermal management of the stack arrangement may be required. Various configurations of such modes, in which active, or a combination of active and passive, thermal management is used, are described in Figure 8. It will be appreciated that solely passive thermal management may be adopted as an alternative to the configurations shown.

Figure 8(a) shows an optical emitter 810, such as a LED, wherein a light emitting element 814 is cooled by a cooling element 812. Thermal isolation is provided by a thermal isolator 816 at the light emitting side of the light source. The thermal isolator may be an oxide film, or may be a thin-film vaccum cavity, such is known in MEMs technologies.

Figure 8(b) shows a detection chamber 820, in where a sample volume 824 is sandwiched between elements 822 and 826, each of which may be a heating element or a cooling element. Such a heating element may conveniently be one or more patterned platinum wires. Thereby, it may be that at the same time the platinum resistance is indicative of the local temperature and can thus be used as temperature sensor. Without limitation, it has been found that example temperatures may be in the range of 0°C to 50°C, and in particular around 37°C.

Figure 8(c) shows an optical detector 830, wherein a light detecting device 834 is sandwiched between a further cooling element 836 and a thermal isolator 832. Thermal isolation is provided at the light detecting side of the light detecting device. The thermal isolator may be an oxide film, or may be a thin-film vaccum cavity, such is known in MEMs technologies.

Cooling elements 812 and 836, may be, for instance, Peltier elements or as described in Zhang et al. in "Silicon Microchannel Heat Sinks", Springer-Verlag, Berlin-Heidelberg (2004) (ISBN 3-540-40181-4).

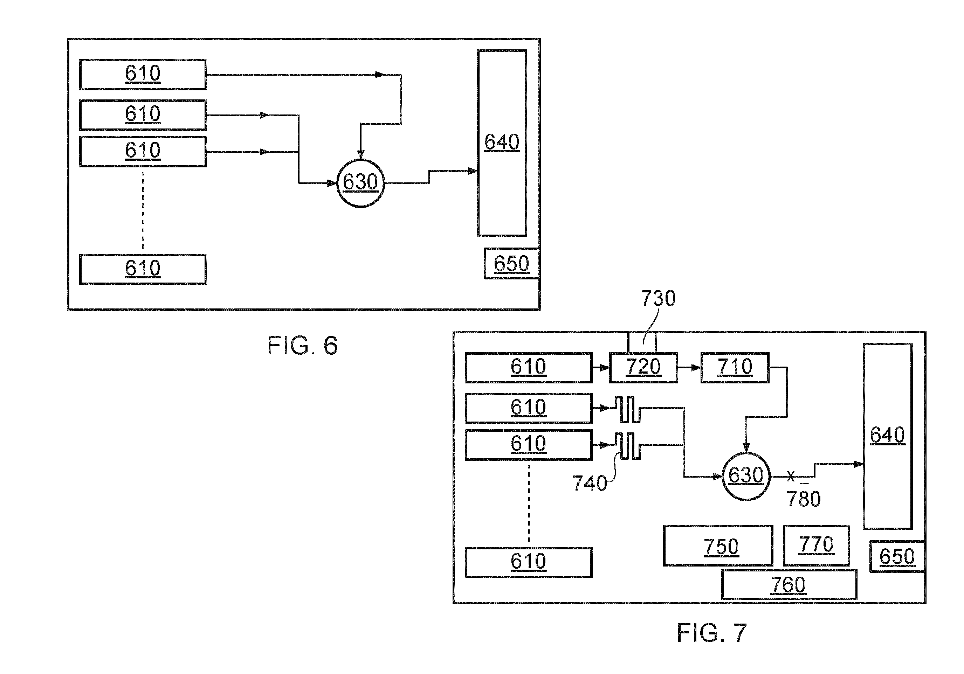

Figure 6 shows a schematic of functionalities on the cartridge in embodiments. In this example the functionalities are those already described above. In particular the cartridge or card includes reservoir functionality 610, microfluidic channel functionality 620 and detection functionality 630, and may include a light source, waste storage functionality 640, and finally electrical connection functionality 650.

Figure 7 shows a schematic of the functionalities on an alternative cartridge; this cartridge includes the same functionalities as shown in figure 6, and in addition includes further microfluidic functionality, such as a plasma filter 710, and fluid input 720 which may include an entry window 730, flow regulation or delay lines 740, valves 780, and electronic functionality. The electronic functionality may include microprocessor logic and/or memory 750, temperature sensing capability 760, NFC or RFID chip functionality 770.

An example of the use of the card in Figure 6 is a biological system in which the activity of an enzyme is measured. In such an analysis the concentration of the enzyme is measured as function of time. The enzyme is thus the target molecule. One of the reservoirs 610 is filled with the enzyme as present for instance in blood, blood plasma, urine, waste water, or the like. Another reservoir 610 may contain a test-peptide connected to a bio-marker. Yet another reservoir 610 may contain solutions to stabilize and or to initiate the analytic reaction. The test is initiated, by transporting the enzyme and the test-peptide and if required an initiator from the respective chambers into the detection chamber; this is done by means of the external actuator - for example the roller or rollers described above.

The analytic reaction comprises the recognition of the test-peptide by the enzyme once both fluids meet in the detection chamber 630. The enzyme cleaves the bio-marker from the test-peptide at a rate that depends on the activity, specificity and concentration of the enzyme. Subsequently, the concentration of the bio-marker is measured by common practice mechanisms in the field of analytical biology: for instance (a) by the absorbance of the bio-marker itself, (b) by the chemo-luminescence, if the biomarker is a chemo-luminescent molecule, or (c) by (time-resolved) fluorescence, if the bio-marker is a fluorescent molecule. It will be appreciated that, also, indirect methods may be used in which the bio-marker activates another fluorescent molecule to emit fluorescence.

The optical detector detects the above-mentioned optical signals and these are read out by the system. Ultimate data treatment and analysis is either supported by the detector chip, for instance using embedded micro-processing logic and memory 750 or by a connected computer. If the optical detector is embedded on the card it may be read out via the connector 650.

As the roller or rollers drive fluid out from the reservoirs 610, the fluid channels and the detection wells start to become filled. Subsequently the waste tank is filled with removed air and the fluids from the reservoir. Driving fluid out of the reservoirs need not occur at the same time and rate. Thus, or in addition, it may be that once the detection chamber is filled with one or more components the fluid movement along some lines is stopped, for instance, by a valve 780 or by stopping the driving force from a roller. Further, it may also be that one of the lines, for instance one that contains the reaction initiator, is delayed in delay line or fluid regulator 740. As a result, other fluids might then enter the detection chamber first and mix, and subsequently the reaction initiator fluid enters the detection chamber to start the analytic reaction.

In such a use case, the enzyme as present in for instance blood may be injected to the card with a syringe via entrance 720 as shown in figure 7. In the case that whole blood is injected, it may be beneficial that platelets should be filtered, as shown at 710, to allow only plasma to enter the detection chamber 630.

An RFID function 770 on the card may assist in monitoring and logging of the temperature of the card (760) and its bio-fluids, during transport and storage. This enlarges quality aspects of the analysis performed with the card.

From reading the present disclosure, other variations and modifications will be apparent to the skilled person. Such variations and modifications may involve equivalent and other features which are already known in the art of biomolecule detection, and which may be used instead of, or in addition to, features already described herein.

In particular, it will be appreciated that the relatives position of detectors and light sources may be interchanged. Thus, whilst in embodiments above the detector has been described as being "below" the detection chamber, and is where appropriate the light source "above" the chamber, it will be appreciated that the order may be reversed, such that the detector is above the detection chamber and the light source below it, irrespective of the orientation of the card and/or reader.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A card for use in an optical detection system for detecting biomolecules,
the card comprising a stacked arrangement of a sample volume and an optical detector,
the sample volume being for containing, in use, an analyte,
the card further comprising at least one reservoir for containing an analyte precursor
and configured such that, in use, the analyte precursor can be urged towards the sample volume by an actuator external to the cartridge.

2. A card as claimed in claim 1, wherein the stacked arrangement further comprises an optical filter between the sample volume and the optical detector.

3. A card as claimed in claim 1 or 2, wherein the stacked arrangement further comprises a light source, and the sample volume is between the light source and the optical detector.

4. A card as claimed in claim 3, wherein the stacked arrangement further comprises an optical filter between the light source and the sample volume.

5. A card as claimed in any preceding claim, wherein at least one of the light source is a light emitting diode and the optical detector is a photodiode.

6. A card as claimed in any preceding claim, wherein the stacked arrangement further comprises a cooling element.

7. A card as claimed in any preceding claim, wherein the stacked arrangement further comprises a heating element.

8. A card as claimed in any preceding claim, wherein the stacked arrangement further comprises a thermal isolation layer.

9. A card as claimed in any preceding claim, further comprising electrical contacts for providing, in use, electrical communication with a reader.

10. A card as claimed in any preceding claim, further comprising a near field communication circuit and antenna for outputting data.

11. A card as claimed in any preceding claim, wherein the card has dimensions in compliance or in partial compliance with the ISO/IEC 8710 standard.

12. A reader for use in an optical detection system for detecting biomolecules and configured to read a card as claimed in any of claims 1 to 8, the reader comprising a compression system for compressing at least part of the card so as to, in use, urge the analyte precursor towards the sample volume.

13. A reader as claimed in claim 12, where the compression system comprises at least one roller.

14. A biomolecule marker detection comprising a cartridge as claimed in any of claims 1 to 11 and a reader as claimed in claim 12 or 13.
